# EUROPEAN PATENT APPLICATION

(11) **EP 3 249 837 A1**
(43) Date of publication of application: **29.11.2017**
(21) Application number: 15879448.7
(22) Date of filing: 30.01.2015
(51) Int. Cl.: H04J 99/00

(54) **TRANSMISSION METHOD, BASE STATION, AND USER EQUIPMENT (UE) IN NON-ORTHOGONAL MULTIPLE ACCESS**

(71) Applicant: Huawei Technologies Co. Ltd., Shenzhen, Guangdong 518129 (CN)
(72) Inventor: LI, Yuanjie, Shenzhen Guangdong 518129 (CN)
(74) Representative: Körber, Martin Hans
(86) International application number: PCT/CN2015/072013
(87) International publication number: WO 2016/119240

(57) **Abstract**

Embodiments of the present invention disclose a non-orthogonal multiple access transmission method, a base station, and UE, where the method includes: configuring a new transmission mode for first UE, and notifying the first UE of the configured new transmission mode, where the new transmission mode indicates: a transmission signal of second UE located in a same cell as the first UE is superposed on a time-frequency resource allocated to the first UE, and the second UE is interfering UE of the first UE; and sending first downlink control signaling to the first UE, so that the first UE demodulates, according to the first downlink control signaling, received data sent by a base station, where the first downlink control signaling includes scheduling indication information of the first UE and scheduling indication information of the second UE. In the embodiments of the present invention, spectrum utilization can be improved.

## Description

### TECHNICAL FIELD

Embodiments of the present invention relate to the field of communications technologies, and in particular, to a non-orthogonal multiple access transmission method, a base station, and UE.

### BACKGROUND

In a non-orthogonal multiple access (non-orthogonal multiple access, NOMA) technology, one resource may be allocated to multiple users, and different powers are allocated to different users to implement multiple access transmission, so as to improve resource utilization. For example, a base station superposes transmission data of two users on a same time-frequency resource, one user is located on a cell edge, and the other user is located in a cell center. In terms of power allocation, more powers are allocated for data transmission of the user located on the cell edge, and a relatively low power is allocated for data transmission of the user located in the cell center. At a receive end, a user receives a result obtained by superposing the data of the two users. For the user located on the cell edge, the data of the user located in the cell center is equivalent to interference generated after superposing. However, because a relatively high power is allocated for data transmission of the user located on the cell edge, with a proper bit rate and modulation scheme configuration, it can be ensured that the user located on the cell edge successfully demodulates data of the user located on the cell edge. After receiving a mixed signal, the user located in the cell center first detects the data (that is, an interfering signal) of the user located on the cell edge, and then, cancels the interfering signal by using an interference cancellation algorithm, so that data of the user located in the cell center remains. In spite of a relatively low power, the user located in the cell center has a relatively good channel condition due to a short distance to the base station, and with a proper bit rate and modulation scheme configuration, the user located in the cell center can also successfully demodulate the data of the user located in the cell center.

In NOMA, multiple multiplexing users are distinguished by using different powers, and are not required to implement mutual orthogonality or low correlation by means of precoding. However, in a Long Term Evolution (Long Term Evolution, LTE) system, for example, in a transmission mode 9 in LTE, the multiple users are distinguished by means of orthogonal precoding, instead of by using different powers. An existing study on the NOMA technology in the industry mainly focuses on improvement and optimization of a transmission solution, how to combine the NOMA technology with multiple-input multiple-output (Multiple-Input Multiple-Output, MIMO), and the like. For how to introduce a NOMA transmission mode into the LTE system, there is still no relevant solution.

### SUMMARY

In view of this, embodiments of the present invention provide a non-orthogonal multiple access transmission method, a base station, and UE, so that a NOMA transmission manner can be introduced into an LTE system, and spectrum utilization can be improved.

According to a first aspect, a base station provided in an embodiment of the present invention includes:
a first configuration unit, configured to: configure a new transmission mode for first user equipment UE, and notify the first UE of the configured new transmission mode, where the new transmission mode indicates: a transmission signal of second UE located in a same cell as the first UE is superposed on a time-frequency resource allocated to the first UE, and the second UE is interfering UE of the first UE; and
a first sending unit, configured to send first downlink control signaling to the first UE, so that the first UE demodulates, according to the first downlink control signaling, received data sent by the base station, where the first downlink control signaling includes scheduling indication information of the first UE and scheduling indication information of the second UE.

With reference to the first aspect, in a first implementation manner of the first aspect, when the first configuration unit configures the new transmission mode for the first UE, the first UE demodulates data by using a user-specific reference signal, and the second UE also demodulates data by using the user-specific reference signal, the scheduling indication information of the first UE in the first downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the first downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

With reference to the first aspect, in a second implementation manner of the first aspect, when the first configuration unit configures the new transmission mode for the first UE, the first UE demodulates data by using a user-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically includes one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in Long Term Evolution LTE, the first downlink control signaling further includes a transport layer quantity of the second UE; when the second UE uses a transmission mode 4 in the LTE, the first downlink control signaling further includes a transport layer quantity and precoding information of the second UE; or when the second UE uses a transmission mode 5 in the LTE or a transmission mode 6 in the LTE, the first downlink control signaling further includes precoding information of the second UE.

With reference to the first or the second implementation manner of the first aspect, in a third implementation manner of the first aspect, the first sending unit is further configured to send second downlink control signaling to the second UE, where the second downlink control signaling includes demodulation reference signal port information of the first UE and scheduling indication information of the second UE, and the scheduling indication information of the second UE in the second downlink control signaling specifically includes one or more types of the following information of the second UE: a resource location indication, a modulation and coding scheme, a quantity of hybrid automatic repeat request processes, new data indicator information, or redundancy version information.

With reference to the first aspect, in a fourth implementation manner of the first aspect, when the first configuration unit configures the new transmission mode for the first UE, the first UE demodulates data by using a cell-specific reference signal, and the second UE also demodulates data by using the cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically includes one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in Long Term Evolution LTE, the first downlink control signaling further includes a transport layer quantity of the second UE; when the second UE uses a transmission mode 4 in the LTE, the first downlink control signaling further includes a transport layer quantity and precoding information of the second UE; or when the second UE uses a transmission mode 5 in the LTE or a transmission mode 6 in the LTE, the first downlink control signaling further includes precoding information of the second UE.

With reference to the first aspect, in a fifth implementation manner of the first aspect, when the first configuration unit configures the new transmission mode for the first UE, the first UE demodulates data by using a cell-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

With reference to the first, the second, the third, the fourth, or the fifth implementation manner of the first aspect, in a sixth implementation manner of the first aspect, the scheduling indication information of the second UE in the first downlink control signaling specifically further includes: new data indicator information and/or redundancy version information of the second UE.

According to a second aspect, a base station provided in an embodiment of the present invention includes:
a second configuration unit, configured to: configure a new transmission mode for first user equipment UE and second UE, and notify the first UE and the second UE of the configured new transmission mode, where the new transmission mode indicates: a transmission signal of the first UE and a transmission signal of the second UE multiplex a same time-frequency resource, the first UE and the second UE are located in a same cell, and the first UE and the second UE are interfering UE of each other; and
a second sending unit, configured to send same downlink control signaling to the first UE and the second UE, so that the first UE and the second UE demodulate, according to the downlink control signaling, received data sent by the base station, where the downlink control signaling includes scheduling indication information of the first UE and scheduling indication information of the second UE.

With reference to the second aspect, in a first implementation manner of the second aspect, the scheduling indication information of the first UE specifically includes one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

According to a third aspect, the present invention provides user equipment UE, the UE is first UE, and the first UE includes:
a receiving unit, configured to receive configuration information that is of a new transmission mode and is sent by a base station, where the new transmission mode indicates: the base station superposes a transmission signal, of second UE located in a same cell as the first UE, on a time-frequency resource allocated by the base station to the first UE, and the second UE is interfering UE of the first UE, where
the receiving unit is further configured to receive, in the new transmission mode, downlink control signaling sent by the base station, where the downlink control signaling includes scheduling indication information of the first UE and scheduling indication information of the second UE; and
a demodulation unit, configured to demodulate, according to the downlink control signaling, received data sent by the base station.

With reference to the third aspect, in a first implementation manner of the third aspect, in the new transmission mode, when the first UE demodulates data by using a user-specific reference signal, and the second UE also demodulates data by using the user-specific reference signal, the scheduling indication information of the first UE in the downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

With reference to the third aspect, in a second implementation manner of the third aspect, in the new transmission mode, when the first UE demodulates data by using a user-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically includes one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in Long Term Evolution LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in the LTE or a transmission mode 6 in the LTE, the downlink control signaling further includes precoding information of the second UE.

With reference to the third aspect, in a third implementation manner of the third aspect, in the new transmission mode, when the first UE demodulates data by using a cell-specific reference signal, and the second UE also demodulates data by using the cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically includes one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in Long Term Evolution LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in the LTE or a transmission mode 6 in the LTE, the downlink control signaling further includes precoding information of the second UE.

With reference to the third aspect, in a fourth implementation manner of the third aspect, in the new transmission mode, when the first UE demodulates data by using a cell-specific reference signal, and the second UE demodulates data by using a user-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

With reference to the first, the second, the third, or the fourth implementation manner of the third aspect, in a fifth implementation manner of the third aspect, the scheduling indication information of the second UE in the downlink control signaling specifically further includes: new data indicator information and/or redundancy version information of the second UE.

With reference to the third aspect, in a sixth implementation manner of the third aspect, if the second UE also receives the configuration information of the new transmission mode and the downlink control signaling, the scheduling indication information of the first UE in the downlink control signaling specifically includes one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

According to a fourth aspect, a base station provided in an embodiment of the present invention includes a first processor and a first transmitter, where
the first processor is configured to: configure a new transmission mode for first user equipment UE, and notify the first UE of the configured new transmission mode, where the new transmission mode indicates: a transmission signal of second UE located in a same cell as the first UE is superposed on a time-frequency resource allocated to the first UE, and the second UE is interfering UE of the first UE; and
the first processor is further configured to control the first transmitter to send first downlink control signaling to the first UE, so that the first UE demodulates, according to the first downlink control signaling, received data sent by the base station, where the first downlink control signaling includes scheduling indication information of the first UE and scheduling indication information of the second UE.

With reference to the fourth aspect, in a first implementation manner of the fourth aspect, when the first processor configures the new transmission mode for the first UE, the first UE demodulates data by using a user-specific reference signal, and the second UE also demodulates data by using the user-specific reference signal, the scheduling indication information of the first UE in the first downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the first downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

With reference to the fourth aspect, in a second implementation manner of the fourth aspect, when the first processor configures the new transmission mode for the first UE, the first UE demodulates data by using a user-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically includes one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in Long Term Evolution LTE, the first downlink control signaling further includes a transport layer quantity of the second UE; when the second UE uses a transmission mode 4 in the LTE, the first downlink control signaling further includes a transport layer quantity and precoding information of the second UE; or when the second UE uses a transmission mode 5 in the LTE or a transmission mode 6 in the LTE, the first downlink control signaling further includes precoding information of the second UE.

With reference to the first or the second implementation manner of the fourth aspect, in a third implementation of the fourth aspect, the first processor is further configured to control the first transmitter to send second downlink control signaling to the second UE, where the second downlink control signaling includes demodulation reference signal port information of the first UE and scheduling indication information of the second UE, and the scheduling indication information of the second UE in the second downlink control signaling specifically includes one or more types of the following information of the second UE: a resource location indication, a modulation and coding scheme, a quantity of hybrid automatic repeat request processes, new data indicator information, or redundancy version information.

With reference to the fourth aspect, in a fourth implementation manner of the fourth aspect, when the first processor configures the new transmission mode for the first UE, the first UE demodulates data by using a cell-specific reference signal, and the second UE also demodulates data by using the cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically includes one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in Long Term Evolution LTE, the first downlink control signaling further includes a transport layer quantity of the second UE; when the second UE uses a transmission mode 4 in the LTE, the first downlink control signaling further includes a transport layer quantity and precoding information of the second UE; or when the second UE uses a transmission mode 5 in the LTE or a transmission mode 6 in the LTE, the first downlink control signaling further includes precoding information of the second UE.

With reference to the fourth aspect, in a fifth implementation manner of the fourth aspect, when the first processor configures the new transmission mode for the first UE, the first UE demodulates data by using a cell-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

With reference to the first, the second, the third, the fourth, or the fifth implementation manner of the fourth aspect, in a sixth implementation manner of the fourth aspect, the scheduling indication information of the second UE in the first downlink control signaling specifically further includes: new data indicator information and/or redundancy version information of the second UE.

According to a fifth aspect, a base station provided in an embodiment of the present invention includes a second processor and a second transmitter, where
the second processor is configured to: configure a new transmission mode for first user equipment UE and second UE, and notify the first UE and the second UE of the configured new transmission mode, where the new transmission mode indicates: a transmission signal of the first UE and a transmission signal of the second UE multiplex a same time-frequency resource, the first UE and the second UE are located in a same cell, and the first UE and the second UE are interfering UE of each other; and
the second processor is further configured to control the second transmitter to send same downlink control signaling to the first UE and the second UE, so that the first UE and the second UE demodulate, according to the downlink control signaling, received data sent by the base station, where the downlink control signaling includes scheduling indication information of the first UE and scheduling indication information of the second UE.

With reference to the fifth aspect, in a first implementation manner of the fifth aspect, the scheduling indication information of the first UE specifically includes one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

According to a sixth aspect, an embodiment of the present invention provides user equipment UE, the UE is first UE, and the first UE includes a third processor and a receiver, where
the third processor is configured to control the receiver to receive configuration information of a new transmission mode, where the new transmission mode indicates: the base station superposes a transmission signal, of second UE located in a same cell as the first UE, on a time-frequency resource allocated by the base station to the first UE, and the second UE is interfering UE of the first UE;
the third processor is further configured to control, in the new transmission mode, the receiver to receive downlink control signaling sent by the base station, where the downlink control signaling includes scheduling indication information of the first UE and scheduling indication information of the second UE; and
the third processor is further configured to demodulate, according to the downlink control signaling, received data sent by the base station.

With reference to the sixth aspect, in a first implementation manner of the sixth aspect, in the new transmission mode, when the first UE demodulates data by using a user-specific reference signal, and the second UE also demodulates data by using the user-specific reference signal, the scheduling indication information of the first UE in the downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

With reference to the sixth aspect, in a second implementation manner of the sixth aspect, in the new transmission mode, when the first UE demodulates data by using a user-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically includes one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in Long Term Evolution LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in the LTE or a transmission mode 6 in the LTE, the downlink control signaling further includes precoding information of the second UE.

With reference to the sixth aspect, in a third implementation manner of the sixth aspect, in the new transmission mode, when the first UE demodulates data by using a cell-specific reference signal, and the second UE also demodulates data by using the cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically includes one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in Long Term Evolution LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in the LTE or a transmission mode 6 in the LTE, the downlink control signaling further includes precoding information of the second UE.

With reference to the sixth aspect, in a fourth implementation manner of the sixth aspect, in the new transmission mode, when the first UE demodulates data by using a cell-specific reference signal, and the second UE demodulates data by using a user-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

With reference to the first, the second, the third, or the fourth implementation manner of the sixth aspect, in a fifth implementation manner of the sixth aspect, the scheduling indication information of the second UE in the downlink control signaling specifically further includes: new data indicator information and/or redundancy version information of the second UE.

With reference to the sixth aspect, in a sixth implementation manner of the sixth aspect, if the second UE also receives the configuration information of the new transmission mode and the downlink control signaling, the scheduling indication information of the first UE in the downlink control signaling specifically includes one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

According to a seventh aspect, an embodiment of the present invention provides a non-orthogonal multiple access transmission method, where the method is applied to a base station, and includes:
configuring a new transmission mode for first user equipment UE, and notifying the first UE of the configured new transmission mode, where the new transmission mode indicates: a transmission signal of second UE located in a same cell as the first UE is superposed on a time-frequency resource allocated to the first UE, and the second UE is interfering UE of the first UE; and
sending first downlink control signaling to the first UE, so that the first UE demodulates, according to the first downlink control signaling, received data sent by the base station, where the first downlink control signaling includes scheduling indication information of the first UE and scheduling indication information of the second UE.

With reference to the seventh aspect, in a first implementation manner of the seventh aspect, when the new transmission mode is configured for the first UE, the first UE demodulates data by using a user-specific reference signal, and the second UE also demodulates data by using the user-specific reference signal, the scheduling indication information of the first UE in the first downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the first downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

With reference to the seventh aspect, in a second implementation manner of the seventh aspect, when the new transmission mode is configured for the first UE, the first UE demodulates data by using a user-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically includes one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in Long Term Evolution LTE, the first downlink control signaling further includes a transport layer quantity of the second UE; when the second UE uses a transmission mode 4 in the LTE, the first downlink control signaling further includes a transport layer quantity and precoding information of the second UE; or when the second UE uses a transmission mode 5 in the LTE or a transmission mode 6 in the LTE, the first downlink control signaling further includes precoding information of the second UE.

With reference to the first or the second implementation manner of the seventh aspect, in a third implementation manner of the seventh aspect, the method further includes:
sending second downlink control signaling to the second UE, where the second downlink control signaling includes demodulation reference signal port information of the first UE and scheduling indication information of the second UE, and the scheduling indication information of the second UE in the second downlink control signaling specifically includes one or more types of the following information of the second UE: a resource location indication, a modulation and coding scheme, a quantity of hybrid automatic repeat request processes, new data indicator information, or redundancy version information.

With reference to the seventh aspect, in a fourth implementation manner of the seventh aspect, when the new transmission mode is configured for the first UE, the first UE demodulates data by using a cell-specific reference signal, and the second UE also demodulates data by using the cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically includes one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in Long Term Evolution LTE, the first downlink control signaling further includes a transport layer quantity of the second UE; when the second UE uses a transmission mode 4 in the LTE, the first downlink control signaling further includes a transport layer quantity and precoding information of the second UE; or when the second UE uses a transmission mode 5 in the LTE or a transmission mode 6 in the LTE, the first downlink control signaling further includes precoding information of the second UE.

With reference to the seventh aspect, in a fifth implementation manner of the seventh aspect, when the new transmission mode is configured for the first UE, the first UE demodulates data by using a cell-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

With reference to the first, the second, the third, the fourth, or the fifth implementation manner of the seventh aspect, in a sixth implementation manner of the seventh aspect, the scheduling indication information of the second UE in the first downlink control signaling specifically further includes: new data indicator information and/or redundancy version information of the second UE.

According to an eighth aspect, an embodiment of the present invention provides a non-orthogonal multiple access transmission method, where the method is applied to a base station, and includes:
configuring a new transmission mode for first user equipment UE and second UE, and notifying the first UE and the second UE of the configured new transmission mode, where the new transmission mode indicates: a transmission signal of the first UE and a transmission signal of the second UE multiplex a same time-frequency resource, the first UE and the second UE are located in a same cell, and the first UE and the second UE are interfering UE of each other; and
sending same downlink control signaling to the first UE and the second UE, so that the first UE and the second UE demodulate, according to the downlink control signaling, received data sent by the base station, where the downlink control signaling includes scheduling indication information of the first UE and scheduling indication information of the second UE.

With reference to the eighth aspect, in a first implementation manner of the eighth aspect, the scheduling indication information of the first UE specifically includes one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

According to a ninth aspect, an embodiment of the present invention provides a non-orthogonal multiple access transmission method, where the method is applied to user equipment UE, the UE is first UE, and the method includes:
receiving configuration information that is of a new transmission mode and is sent by a base station, where the new transmission mode indicates: the base station superposes a transmission signal, of second UE located in a same cell as the first UE, on a time-frequency resource allocated by the base station to the first UE, and the second UE is interfering UE of the first UE;
receiving, in the new transmission mode, downlink control signaling sent by the base station, where the downlink control signaling includes scheduling indication information of the first UE and scheduling indication information of the second UE; and
demodulating, according to the downlink control signaling, received data sent by the base station.

With reference to the ninth aspect, in a first implementation manner of the ninth aspect, in the new transmission mode, when the first UE demodulates data by using a user-specific reference signal, and the second UE also demodulates data by using the user-specific reference signal, the scheduling indication information of the first UE in the downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

With reference to the ninth aspect, in a second implementation manner of the ninth aspect, in the new transmission mode, when the first UE demodulates data by using a user-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically includes one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in Long Term Evolution LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in the LTE or a transmission mode 6 in the LTE, the downlink control signaling further includes precoding information of the second UE.

With reference to the ninth aspect, in a third implementation manner of the ninth aspect, in the new transmission mode, when the first UE demodulates data by using a cell-specific reference signal, and the second UE also demodulates data by using the cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically includes one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in Long Term Evolution LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in the LTE or a transmission mode 6 in the LTE, the downlink control signaling further includes precoding information of the second UE.

With reference to the ninth aspect, in a fourth implementation manner of the ninth aspect, in the new transmission mode, when the first UE demodulates data by using a cell-specific reference signal, and the second UE demodulates data by using a user-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

With reference to the first, the second, the third, or the fourth implementation manner of the ninth aspect, in a fifth implementation manner of the ninth aspect, the scheduling indication information of the second UE in the downlink control signaling specifically further includes: new data indicator information and/or redundancy version information of the second UE.

With reference to the ninth aspect, in a sixth implementation manner of the ninth aspect, if the second UE also receives the configuration information of the new transmission mode and the downlink control signaling, the scheduling indication information of the first UE in the downlink control signaling specifically includes one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

It can be learned from the foregoing technical solutions that the embodiments of the present invention have the following advantages:

In the embodiments of the present invention, a base station configures a new transmission mode for first UE, and notifies the first UE of the configured new transmission mode, where the new transmission mode indicates: a transmission signal of second UE located in a same cell as the first UE is superposed on a time-frequency resource allocated to the first UE, and the second UE is interfering UE of the first UE, that is, the base station configures a NOMA transmission mode for the first UE; and then, sends first downlink control signaling to the first UE, so that the first UE demodulates, according to the first downlink control signaling, received data sent by the base station, where the first downlink control signaling includes scheduling indication information of the first UE and scheduling indication information of the second UE. In the embodiments of the present invention, because first downlink control signaling includes scheduling indication information of second UE, first UE may first cancel interference data of the second UE according to the scheduling indication information of the second UE that is included in the first downlink control signaling, and successfully demodulates data of the first UE. The second UE may directly demodulate data of the second UE without performing interference cancellation. Therefore, in the present invention, a NOMA transmission manner is introduced into an LTE system, and spectrum utilization is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an embodiment of a base station according to the present invention;
FIG. 2 is a schematic diagram of another embodiment of a base station according to the present invention;
FIG. 3 is a schematic diagram of another embodiment of a base station according to the present invention;
FIG. 4 is a schematic diagram of another embodiment of a base station according to the present invention;
FIG. 5 is a schematic diagram of an embodiment of UE according to the present invention;
FIG. 6 is a schematic diagram of another embodiment of UE according to the present invention;
FIG. 7 is a schematic diagram of an embodiment of a non-orthogonal multiple access transmission method according to the present invention;
FIG. 8 is a schematic diagram of another embodiment of a non-orthogonal multiple access transmission method according to the present invention; and
FIG. 9 is a schematic diagram of another embodiment of a non-orthogonal multiple access transmission method according to the present invention.

### DESCRIPTION OF EMBODIMENTS

The following describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The present invention provides a non-orthogonal multiple access transmission method, a base station, and UE, so that a NOMA transmission manner can be introduced into an LTE system, and spectrum utilization can be improved. In the embodiments of the present invention, first UE mainly refers to UE located in a cell center, and second UE mainly refers to UE that is located in a same cell as the first UE and that is located on a cell edge. A base station may determine, according to information such as a reference signal received power (Reference Signal Receiving Power, RSRP), reference signal received quality (Reference Signal Receiving Quality, RSRQ), or radio channel quality (Channel Quality Indicator, CQI) that is reported by each UE, which UE is the first UE and which UE is the second UE.

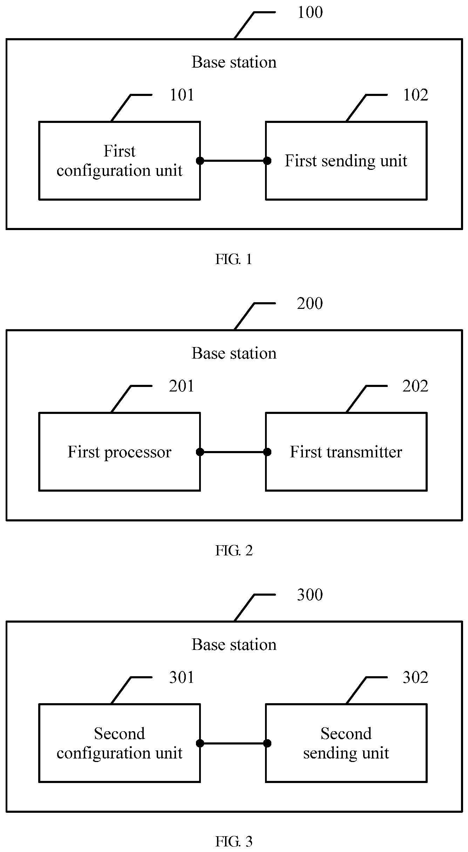

Referring to FIG. 1, FIG. 1 is a schematic diagram of an embodiment of a base station according to the present invention. A base station 100 in this embodiment includes a first configuration unit 101 and a first sending unit 102.

The first configuration unit 101 is configured to: configure a new transmission mode for first user equipment (User Equipment, UE), and notify the first UE of the configured new transmission mode, where the new transmission mode indicates: a transmission signal of second UE located in a same cell as the first UE is superposed on a time-frequency resource allocated to the first UE, and the second UE is interfering UE of the first UE; and the interfering UE indicates that the transmission signal of the second UE and a transmission signal of the first UE are orthogonal in none of a time domain, a frequency domain, a space domain, or a code domain, that is, the first configuring unit 101 configures a NOMA transmission mode for the first UE.

The first sending unit 102 is configured to send first downlink control signaling to the first UE, so that the first UE demodulates, according to the first downlink control signaling, a received data signal sent by the base station, where the first downlink control signaling includes scheduling indication information of the first UE and scheduling indication information of the second UE.

Because when a new transmission mode is configured for first UE, a transmission signal of second UE is superposed on a time-frequency resource allocated by the base station to the first UE, and a transmission signal of the first UE and the transmission signal of the second UE multiplex a same time-frequency resource, for the first UE, the transmission signal of the second UE is an interfering signal, and before demodulating the transmission signal of the first UE, the first UE first needs to demodulate the transmission signal of the second UE and cancel the transmission signal of the second UE. However, in this embodiment, because first downlink control signaling sent to the first UE includes scheduling indication information of the second UE, the first UE may identify and cancel transmission data of the second UE according to the scheduling indication information of the second UE that is included in the first downlink control signaling, and successfully demodulates data of the first UE. The second UE may directly demodulate data of the second UE without performing interference cancellation. Therefore, in the present invention, a NOMA transmission manner is introduced into an LTE system, and spectrum utilization is improved.

When the first configuration unit 101 configures the new transmission mode for the first UE, the first configuration unit 101 may also configure the new transmission mode for the second UE, or may configure an original transmission mode in LTE for the second UE, for example, TM1 to TM9. When the first configuration unit 101 configures the new transmission mode for the first UE, the first UE may demodulate data by using a user-specific reference signal, or may demodulate data by using a cell-specific reference signal. Descriptions are separately given in the following.

In a first case, when the first configuration unit 101 configures the new transmission mode for the first UE, the first UE demodulates data by using a user-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, a quantity of hybrid automatic repeat request processes, new data indicator information, redundancy version information, a ratio of energy per resource element (energy per resource, EPRE) of a pilot to EPRE of data of the first UE, a transport layer quantity, or antenna port information; and the scheduling indication information of the second UE in the first downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

When the NOMA transmission mode is not introduced into LTE, the base station sends, to each UE, downlink control signaling that carries information related to each UE. When the NOMA transmission mode is introduced into LTE, it may be understood as follows: For the first UE, the base station adds the scheduling indication information of the second UE to downlink control signaling originally to be sent to the first UE (for example, the adding the scheduling indication information of the second UE may be implemented by adding a field to the original downlink control signaling), so as to form new downlink control signaling (that is, the first downlink control signaling); replaces, with the first downlink control signaling, the downlink control signaling originally to be sent to the first UE; and sends the first downlink control signaling to the first UE. For the second UE, the base station does not send new downlink control signaling to the second UE, that is, for the second UE, the base station still continues to use downlink control signaling originally to be sent to the second UE, and the second UE does not know that the base station sends a NOMA modulation signal.

In a second case, when the first configuration unit 101 configures the new transmission mode for the first UE, the first UE demodulates data by using a user-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically includes one or more types of the following information of the second UE: a radio network temporary identifier, a modulation and coding scheme, a ratio PA of a data subcarrier power of an orthogonal frequency division multiplexing (Orthogonal Frequency Division Multiplexing, OFDM) symbol without a pilot to a pilot subcarrier power, a ratio PB of a data subcarrier power of an OFDM symbol with a pilot to a pilot subcarrier power, or a transmission mode, where when the second UE uses a transmission mode 3 in LTE, the first downlink control signaling further includes a transport layer quantity of the second UE; when the second UE uses a transmission mode 4 in LTE, the first downlink control signaling further includes a transport layer quantity and precoding information of the second UE; or when the second UE uses a transmission mode 5 in LTE or a transmission mode 6 in LTE, the first downlink control signaling further includes precoding information of the second UE.

In this case, it may be still considered that the base station does not send new downlink control signaling to the second UE, and the second UE does not know that the base station sends a NOMA modulation signal.

In the foregoing two cases, the first sending unit 102 may also send new downlink control signaling (that is, second downlink control signaling) to the second UE. The second downlink control signaling includes demodulation reference signal (DeModulation Reference Signal, DMRS) port information of the first UE and scheduling indication information of the second UE. The scheduling indication information of the second UE in the second downlink control signaling specifically includes one or more types of the following information of the second UE: a resource location indication, a modulation and coding scheme, a quantity of hybrid automatic repeat request processes, new data indicator information, or redundancy version information. In this case, it may be understood as follows: For the second UE, the base station adds the DMRS port information of the first UE to downlink control signaling originally to be sent to the second UE (for example, the adding the DMRS port information of the first UE may be implemented by adding a field to the original downlink control signaling), so as to form new downlink control signaling (that is, the second downlink control signaling); replaces, with the second downlink control signaling, the downlink control signaling originally to be sent to the second UE; and sends the second downlink control signaling to the second UE. In this case, the second UE knows that the base station sends a NOMA modulation signal.

In the foregoing several cases, because the first UE demodulates data by using a user-specific reference signal, there is a resource mapping conflict between the user-specific reference signal and data of the second UE. The conflict may be resolved according to the DMRS port information of the first UE that is included in the second downlink control signaling and by using the following method: a DMRS pilot of the first UE and the data of the second UE are directly superposed, or the data of the second UE is punctured at a DMRS pilot location of the first UE.

In a third case, when the first configuration unit 101 configures the new transmission mode for the first UE, the first UE demodulates data by using a cell-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically includes one or more types of the following information of the second UE: a ratio PA of a data subcarrier power of an OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in LTE, the first downlink control signaling further includes a transport layer quantity of the second UE; when the second UE uses a transmission mode 4 in LTE, the first downlink control signaling further includes a transport layer quantity and precoding information of the second UE; or when the second UE uses a transmission mode 5 in LTE or a transmission mode 6 in LTE, the first downlink control signaling further includes precoding information of the second UE.

For the second UE, it may be considered that the base station does not send new downlink control signaling to the second UE, and still continues to use original downlink control signaling for the second UE, and the second UE does not know that the base station sends a NOMA modulation signal.

In a fourth case, when the first configuration unit 101 configures the new transmission mode for the first UE, the first UE demodulates data by using a cell-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically includes one or more types of the following information of the second UE: a radio network temporary identifier, a transmission mode, a modulation and coding scheme, antenna port information, a transport layer quantity, a ratio of EPRE of data of the first UE to EPRE of data of the second UE, a ratio of EPRE of data of the first UE to EPRE of a dedicated pilot of the second UE, or dedicated pilot power information.

For the second UE, it may be considered that the base station does not send new downlink control signaling to the second UE, and still continues to use original downlink control signaling for the second UE, and the second UE does not know that the base station sends a NOMA modulation signal.

In addition, in the foregoing various cases, the first downlink control signaling sent by the sending unit 102 to the first UE may further include new data indicator (new data indicator, NDI) information and/or redundancy version information of the second UE. In this way, after receiving the first downlink control signaling, the first UE may determine, by determining an NDI or a redundancy version of the second UE, whether the data of the second UE is retransmitted data. If the data of the second UE is retransmitted data, the first UE may perform interference reconstruction with reference to a previous result of interfering signal estimation, and perform interference cancellation according to a result of interference reconstruction, so that interfering signal estimation correctness can be improved.

Referring to FIG. 2 in the following, another embodiment of a base station in the present invention includes a first processor 201 and a transmitter 202.

The first processor 201 is configured to: configure a new transmission mode for first UE, and notify the first UE of the configured new transmission mode, where the new transmission mode indicates: a transmission signal of second UE located in a same cell as the first UE is superposed on a time-frequency resource allocated to the first UE, and the second UE is interfering UE of the first UE; and the interfering UE indicates that the transmission signal of the second UE and a transmission signal of the first UE are orthogonal in none of a time domain, a frequency domain, a space domain, or a code domain.

The first processor 201 is further configured to control the first transmitter 202 to send first downlink control signaling to the first UE, so that the first UE demodulates, according to the first downlink control signaling, received data sent by the base station, where the first downlink control signaling includes scheduling indication information of the first UE and scheduling indication information of the second UE.

In addition, a base station 200 in this embodiment may be further configured to execute other actions that can be executed by the base station 100 in the foregoing embodiment, and details are not described herein again. For details, refer to the foregoing embodiment.

The foregoing two embodiments describe a base station that separately generates different downlink control signaling for first UE and second UE and that performs scheduling for different UEs by using different downlink control signaling. The following embodiments describe a base station that generates same downlink control signaling for different UEs and that performs scheduling by using same downlink control signaling. Referring to FIG. 3, a base station 300 in this embodiment includes a second configuration unit 301 and a second sending unit 302.

The second configuration unit 301 is configured to: configure a new transmission mode for first UE and second UE, and notify the first UE and the second UE of the configured new transmission mode, where the new transmission mode indicates: a transmission signal of the first UE and a transmission signal of the second UE multiplex a same time-frequency resource, the first UE and the second UE are located in a same cell, and the first UE and the second UE are interfering UE of each other; and the interfering UE indicates that the transmission signal of the second UE and the transmission signal of the first UE are orthogonal in none of a time domain, a frequency domain, a space domain, or a code domain.

The second sending unit 302 is configured to send same downlink control signaling to the first UE and the second UE, so that the first UE and the second UE demodulate, according to the downlink control signaling, a received data signal sent by the base station, where the downlink control signaling includes scheduling indication information of the first UE and scheduling indication information of the second UE.

The scheduling indication information of the first UE specifically includes one or more types of the following information of the first UE: a resource location indication, a modulation and coding scheme, a ratio of EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information. The scheduling indication information of the second UE specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

It should be noted that in this embodiment, because the transmission signal of the first UE and the transmission signal of the second UE multiplex a same time-frequency resource, the resource location indication of the first UE is the same as the resource location indication of the second UE. In specific implementation, the resource location indication of the first UE and the resource location indication of the second UE may be replaced with a common resource location indication.

In this embodiment, because scheduling indication information of another UE is configured in downlink control signaling to be sent by a second sending unit 302 to each UE, each UE may successfully demodulate data of each UE according to information included in the downlink control signaling. Therefore, in the present invention, a NOMA transmission manner is introduced into an LTE system, and spectrum utilization is improved. In addition, each piece of downlink control signaling indicates scheduling information of two multiplexing users, and a base station schedules multiple users by using same downlink control signaling, thereby reducing signaling overheads.

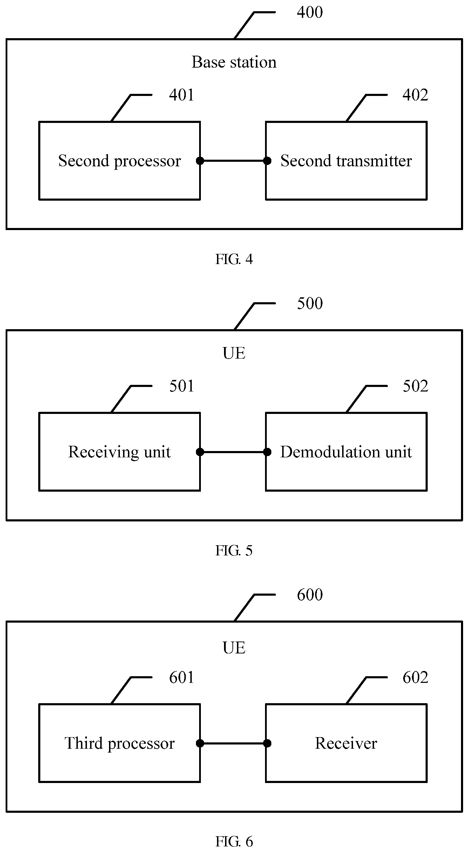

Referring to FIG. 4, another embodiment of a base station in the present invention includes a second processor 401 and a second transmitter 402.

The second processor 401 is configured to: configure a new transmission mode for first UE and second UE, and notify the first UE and the second UE of the configured new transmission mode, where the new transmission mode indicates: a transmission signal of the first UE and a transmission signal of the second UE multiplex a same time-frequency resource, the first UE and the second UE are located in a same cell, and the first UE and the second UE are interfering UE of each other; and the interfering UE indicates that the transmission signal of the second UE and the transmission signal of the first UE are orthogonal in none of a time domain, a frequency domain, a space domain, or a code domain.

The second processor 401 is further configured to control the second transmitter 402 to send same downlink control signaling to the first UE and the second UE, so that the first UE and the second UE demodulate, according to the downlink control signaling, received data sent by the base station, where the downlink control signaling includes scheduling indication information of the first UE and scheduling indication information of the second UE.

The scheduling indication information of the first UE specifically includes one or more types of the following information of the first UE: a resource location indication, a modulation and coding scheme, a ratio of EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information. The scheduling indication information of the second UE specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

It should be noted that in this embodiment, because the transmission signal of the first UE and the transmission signal of the second UE multiplex a same time-frequency resource, the resource location indication of the first UE is the same as the resource location indication of the second UE. In specific implementation, the resource location indication of the first UE and the resource location indication of the second UE may be replaced with a common resource location indication.

The following describes UE provided in an embodiment of the present invention. Referring to FIG. 5, the UE in this embodiment is first UE, and the UE in this embodiment includes:
a receiving unit 501, configured to receive configuration information that is of a new transmission mode and is sent by a base station, where the new transmission mode indicates: the base station superposes a transmission signal, of second UE located in a same cell as the first UE, on a time-frequency resource allocated by the base station to the first UE, and the second UE is interfering UE of the first UE, where
the receiving unit 501 is further configured to receive, in the new transmission mode, downlink control signaling sent by the base station, where the downlink control signaling includes scheduling indication information of the first UE and scheduling indication information of the second UE; and
a demodulation unit 503, configured to demodulate, according to the downlink control signaling, received data sent by the base station.

Specifically, when the base station configures the new transmission mode for the first UE, the base station notifies the first UE of the configured new transmission mode (for example, the notification may be implemented by sending signaling), that is, the base station sends the configuration information of the new transmission mode to the first UE. If the base station does not configure the new transmission mode for the first UE, that is, the base station does not introduce a NOMA transmission mode, but configures an original transmission mode in LTE, the base station correspondingly sends original downlink control signaling to the first UE, and the first UE demodulates data according to the original downlink control signaling. In this case, there is no time-frequency resource multiplexing, and spectrum utilization is not improved.

In the new transmission mode, the demodulation unit 503 of the first UE may demodulate data by using a user-specific reference signal, or may demodulate data by using a cell-specific reference signal. Descriptions are separately given in the following.

In a first case, in the new transmission mode, when the first UE demodulates data by using a user-specific reference signal, and the second UE demodulates data by using the user-specific reference signal, the scheduling indication information of the first UE in the downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

In this case, compared with the downlink control signaling originally sent to the first UE, the downlink control signaling sent to the first UE includes the scheduling indication information of the second UE. For the second UE, it may be considered that the base station does not send new downlink control signaling to the second UE, and still continues to use original downlink control signaling for the second UE, and the second UE does not know that the base station sends a NOMA modulation signal.

In a second case, in the new transmission mode, when the first UE demodulates data by using a user-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically includes one or more types of the following information of the second UE: a radio network temporary identifier, a modulation and coding scheme, a ratio PA of a data subcarrier power of an OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in LTE, the downlink control signaling further includes a transport layer quantity of the second UE; when the second UE uses a transmission mode 4 in LTE, the downlink control signaling further includes a transport layer quantity and precoding information of the second UE; or when the second UE uses a transmission mode 5 in LTE or a transmission mode 6 in LTE, the downlink control signaling further includes precoding information of the second UE.

In this case, compared with the downlink control signaling originally sent to the first UE, the downlink control signaling sent to the first UE includes the scheduling indication information of the second UE. For the second UE, it may be considered that the base station does not send new downlink control signaling to the second UE, and still continues to use original downlink control signaling for the second UE, and the second UE does not know that the base station sends a NOMA modulation signal.

In the foregoing two cases, the base station may also send new downlink control signaling to the second UE (that is, the base station adds DMRS port information of the first UE to the downlink control signaling originally to be sent to the second UE). In this case, the downlink control signaling sent to the second UE further includes one or more types of the following information of the second UE: a resource location indication, a modulation and coding scheme, a quantity of hybrid automatic repeat request processes, new data indicator information, or redundancy version information. In this case, the second UE knows that the base station sends a NOMA modulation signal.

In the foregoing several cases, because the first UE demodulates data by using a user-specific reference signal, there is a resource mapping conflict between the user-specific reference signal and data of the second UE. The conflict may be resolved according to the DMRS port information of the first UE and by using the following method: a DMRS pilot of the first UE and the data of the second UE are directly superposed, or the data of the second UE is punctured at a DMRS pilot location of the first UE.

In a third case, in the new transmission mode, when the first UE demodulates data by using a cell-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically includes one or more types of the following information of the second UE: a ratio PA of a data subcarrier power of an OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in LTE or a transmission mode 6 in LTE, the downlink control signaling further includes precoding information of the second UE.

For the second UE, it may be considered that the base station does not send new downlink control signaling to the second UE, and still continues to use original downlink control signaling for the second UE, and the second UE does not know that the base station sends a NOMA modulation signal.

In a fourth case, in the new transmission mode, when the first UE demodulates data by using a cell-specific reference signal, and the second UE demodulates data by using a user-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

For the second UE, it may be considered that the base station does not send new downlink control signaling to the second UE, and still continues to use original downlink control signaling for the second UE, and the second UE does not know that the base station sends a NOMA modulation signal.

In addition, in the foregoing various cases, the scheduling indication information of the second UE in the downlink control signaling sent to the first UE specifically further includes: new data indicator information and/or redundancy version information of the second UE. The demodulation unit 503 determines, according to the new data indicator information and/or the redundancy version information of the second UE, whether the transmission data of the second UE is retransmitted data. If the transmission data of the second UE is retransmitted data, the demodulation unit 503 performs interference reconstruction with reference to an existing result of estimating the transmission signal of the second UE, and performs interference cancellation according to a result of interference reconstruction.

For the foregoing several cases, it is equivalent to that the base station sends different downlink control signaling to different UEs, so as to implement scheduling for different UEs. In practical application, the base station may further configure the new transmission mode for both the first UE and the second UE, and send same downlink control signaling to the first UE and the second UE. In this case, the scheduling indication information of the first UE in the downlink control signaling specifically includes one or more types of the following information of the first UE: a resource location indication, a modulation and coding scheme, a ratio of EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

In this embodiment, because downlink control signaling received by a receiving unit includes scheduling indication information of second UE, first UE may identify and cancel transmission data of the second UE according to the scheduling indication information of the second UE that is included in the downlink control signaling, and successfully demodulates data of the first UE. The second UE may directly demodulate data of the second UE without performing interference cancellation. Therefore, in the present invention, a NOMA transmission manner is introduced into an LTE system, and spectrum utilization is improved.

Referring to FIG. 6, in another embodiment, UE includes a third processor 601 and a receiver 602.

The third processor 601 is configured to control the receiver 602 to receive configuration information of a new transmission mode, where the new transmission mode indicates: a base station superposes a transmission signal, of second UE located in a same cell as the first UE, on a time-frequency resource allocated by the base station to the first UE, and the second UE is interfering UE of the first UE.

The third processor 601 is further configured to control, in the new transmission mode, the receiver 602 to receive downlink control signaling sent by the base station, where the downlink control signaling includes scheduling indication information of the first UE and scheduling indication information of the second UE.

The third processor 601 is further configured to demodulate, according to the downlink control signaling, received data sent by the base station.

In addition, UE 600 in this embodiment may be further configured to execute other actions that can be executed by the UE 500 in the foregoing embodiment, and details are not described herein again. For details, refer to the foregoing embodiment.

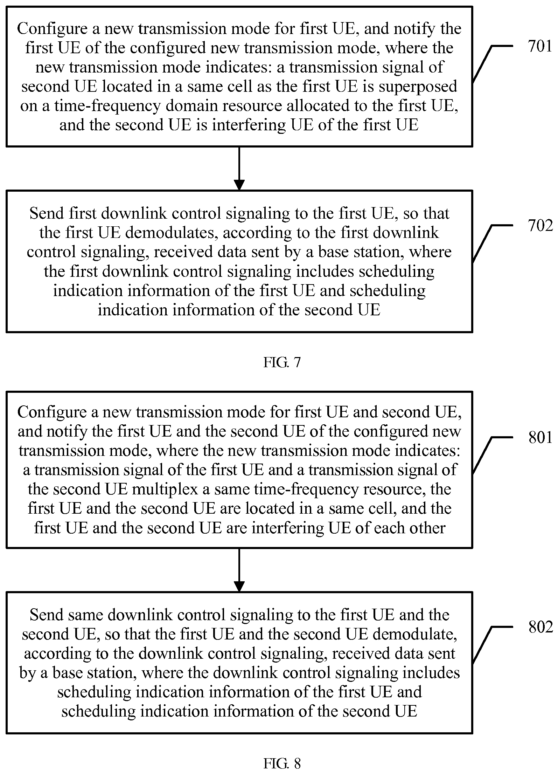

The following describes a non-orthogonal multiple access transmission method provided in the present invention. Referring to FIG. 7, a method in this embodiment is applied to a base station, and the method in this embodiment includes the following steps:
701. Configure a new transmission mode for first UE, where the new transmission mode indicates: a transmission signal of second UE located in a same cell as the first UE is superposed on a time-frequency resource allocated to the first UE, and the second UE is interfering UE of the first UE; and the interfering UE indicates that the transmission signal of the second UE and a transmission signal of the first UE are orthogonal in none of a time domain, a frequency domain, a space domain, or a code domain.
702. Send first downlink control signaling to the first UE, so that the first UE demodulates, according to the first downlink control signaling, received data sent by the base station, where the first downlink control signaling includes scheduling indication information of the first UE and scheduling indication information of the second UE.

In specific implementation, when the new transmission mode is configured for the first UE, the first UE may demodulate data by using a user-specific reference signal, or may demodulate data by using a cell-specific reference signal. Descriptions are separately given in the following.

In a first case, when the new transmission mode is configured for the first UE, the first UE demodulates data by using a user-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, a quantity of hybrid automatic repeat request processes, new data indicator information, redundancy version information, a ratio of EPRE of a pilot to EPRE of data of the first UE, a transport layer quantity, or antenna port information; and the scheduling indication information of the second UE in the first downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

When a NOMA transmission mode is not introduced into LTE, the base station sends, to each UE, downlink control signaling that carries information related to each UE. When a NOMA transmission mode is introduced into LTE, it may be understood as follows: For the first UE, the base station adds the scheduling indication information of the second UE to downlink control signaling originally to be sent to the first UE (for example, the adding the scheduling indication information of the second UE may be implemented by adding a field to the original downlink control signaling), so as to form new downlink control signaling (that is, the first downlink control signaling); replaces, with the first downlink control signaling, the downlink control signaling originally to be sent to the first UE; and sends the first downlink control signaling to the first UE. For the second UE, the base station does not send new downlink control signaling to the second UE, that is, for the second UE, the base station still continues to use downlink control signaling originally to be sent to the second UE, and the second UE does not know that the base station sends a NOMA modulation signal.

In a second case, when the new transmission mode is configured for the first UE, the first UE demodulates data by using a user-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically includes one or more types of the following information of the second UE: a radio network temporary identifier, a modulation and coding scheme, a ratio PA of a data subcarrier power of an OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in LTE, the first downlink control signaling further includes a transport layer quantity of the second UE; when the second UE uses a transmission mode 4 in LTE, the first downlink control signaling further includes a transport layer quantity and precoding information of the second UE; or when the second UE uses a transmission mode 5 in LTE or a transmission mode 6 in LTE, the first downlink control signaling further includes precoding information of the second UE.

In this case, it may be still considered that the base station does not send new downlink control signaling to the second UE, and the second UE does not know that the base station sends a NOMA modulation signal.

In the foregoing two cases, the base station may also send new downlink control signaling (that is, second downlink control signaling) to the second UE. The second downlink control signaling includes DMRS port information of the first UE and scheduling indication information of the second UE. The scheduling indication information of the second UE in the second downlink control signaling specifically includes one or more types of the following information of the second UE: a resource location indication, a modulation and coding scheme, a quantity of hybrid automatic repeat request processes, new data indicator information, or redundancy version information. In this case, it may be understood as follows: For the second UE, the base station adds the DMRS port information of the first UE to downlink control signaling originally to be sent to the second UE (for example, the adding the DMRS port information of the first UE may be implemented by adding a field to the original downlink control signaling), so as to form new downlink control signaling (that is, the second downlink control signaling); replaces, with the second downlink control signaling, the downlink control signaling originally to be sent to the second UE; and sends the second downlink control signaling to the second UE. In this case, the second UE knows that the base station sends a NOMA modulation signal.

In the foregoing several cases, because the first UE demodulates data by using a user-specific reference signal, there is a resource mapping conflict between the user-specific reference signal and data of the second UE. The conflict may be resolved according to the DMRS port information of the first UE that is included in the second downlink control signaling and by using the following method: a DMRS pilot of the first UE and the data of the second UE are directly superposed, or the data of the second UE is punctured at a DMRS pilot location of the first UE.

In a third case, when the new transmission mode is configured for the first UE, the first UE demodulates data by using a cell-specific reference signal, and the second UE demodulates data by using a cell-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically includes one or more types of the following information of the second UE: a ratio PA of a data subcarrier power of an OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in LTE, the first downlink control signaling further includes a transport layer quantity of the second UE; when the second UE uses a transmission mode 4 in LTE, the first downlink control signaling further includes a transport layer quantity and precoding information of the second UE; or when the second UE uses a transmission mode 5 in LTE or a transmission mode 6 in LTE, the first downlink control signaling further includes precoding information of the second UE.

For the second UE, it may be considered that the base station does not send new downlink control signaling to the second UE, and still continues to use original downlink control signaling for the second UE, and the second UE does not know that the base station sends a NOMA modulation signal.

In a fourth case, when the new transmission mode is configured for the first UE, the first UE demodulates data by using a cell-specific reference signal, and the second UE demodulates data by using a user-specific reference signal, the scheduling indication information of the first UE in the first downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically includes one or more types of the following information of the second UE: a radio network temporary identifier, a transmission mode, a modulation and coding scheme, antenna port information, a transport layer quantity, a ratio of EPRE of data of the first UE to EPRE of data of the second UE, a ratio of EPRE of data of the first UE to EPRE of a dedicated pilot of the second UE, or dedicated pilot power information.

For the second UE, it may be considered that the base station does not send new downlink control signaling to the second UE, and still continues to use original downlink control signaling for the second UE, and the second UE does not know that the base station sends a NOMA modulation signal.

In addition, in the foregoing various cases, the first downlink control signaling sent to the first UE may further include NDI information and/or redundancy version information of the second UE. In this way, after receiving the first downlink control signaling, the first UE may determine, by determining an NDI or a redundancy version of the second UE, whether the data of the second UE is retransmitted data. If the data of the second UE is retransmitted data, the first UE may perform interference reconstruction with reference to a previous result of interfering signal estimation, and perform interference cancellation according to a result of interference reconstruction, so that interfering signal estimation correctness can be improved.

In this embodiment of the present invention, because first downlink control signaling includes scheduling indication information of second UE, first UE may cancel interference data of the second UE according to the scheduling indication information of the second UE that is included in the first downlink control signaling, and successfully demodulates data of the first UE. The second UE may directly demodulate data of the second UE without performing interference cancellation. Therefore, in the present invention, a NOMA transmission manner is introduced into an LTE system, and spectrum utilization is improved.

The foregoing embodiment describes a method in which a base station separately generates different downlink control signaling for first UE and second UE, and performs scheduling for different UEs by using different downlink control signaling. The following embodiment describes a method in which same downlink control signaling is generated for different UEs and scheduling is performed by using same downlink control signaling. Referring to FIG. 8, a method in this embodiment is applied to a base station, and the method in this embodiment includes the following steps:
801. Configure a new transmission mode for first UE and second UE, where the new transmission mode indicates: a transmission signal of the first UE and a transmission signal of the second UE multiplex a same time-frequency resource, the first UE and the second UE are located in a same cell, and the first UE and the second UE are interfering UE of each other; and the interfering UE indicates that the transmission signal of the second UE and the transmission signal of the first UE are orthogonal in none of a time domain, a frequency domain, a space domain, or a code domain.
802. Send same downlink control signaling to the first UE and the second UE, so that the first UE and the second UE demodulate, according to the downlink control signaling, received data sent by the base station, where the downlink control signaling includes scheduling indication information of the first UE and scheduling indication information of the second UE.

The scheduling indication information of the first UE specifically includes one or more types of the following information of the first UE: a resource location indication, a modulation and coding scheme, a ratio of EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information. The scheduling indication information of the second UE specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

It should be noted that in this embodiment, because the transmission signal of the first UE and the transmission signal of the second UE multiplex a same time-frequency resource, the resource location indication of the first UE is the same as the resource location indication of the second UE. In specific implementation, the resource location indication of the first UE and the resource location indication of the second UE may be replaced with a common resource location indication.

In this embodiment, because scheduling indication information of another UE is configured in downlink control signaling to be sent to each UE, each UE may successfully demodulate data of each UE according to information included in the downlink control signaling. Therefore, in the present invention, a NOMA transmission manner is introduced into an LTE system, and spectrum utilization is improved. In addition, each piece of downlink control signaling indicates scheduling information of two multiplexing users, and a base station schedules multiple users by using same downlink control signaling, thereby reducing signaling overheads.

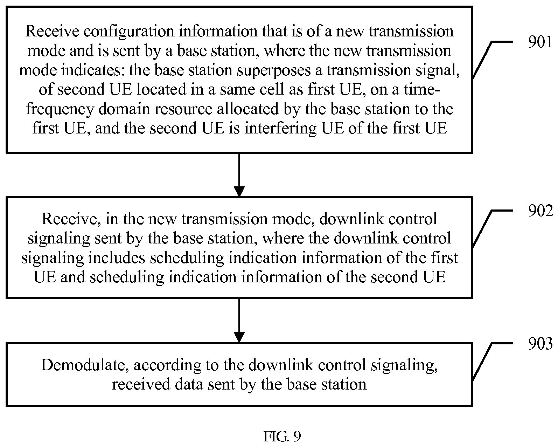

Referring to FIG. 9, FIG. 9 is another embodiment of a non-orthogonal multiple access transmission method according to the present invention. The method in this embodiment is mainly applied to UE, the UE is first UE, and the method in this embodiment includes the followings steps:
901. Receive configuration information that is of a new transmission mode and is sent by a base station, where the new transmission mode indicates: the base station superposes a transmission signal, of second UE located in a same cell as the first UE, on a time-frequency resource allocated by the base station to the first UE, and the second UE is interfering UE of the first UE.
902. Receive, in the new transmission mode, downlink control signaling sent by the base station, where the downlink control signaling includes scheduling indication information of the first UE and scheduling indication information of the second UE.
903. Demodulate, according to the downlink control signaling, received data sent by the base station.

Specifically, when the base station configures the new transmission mode for the first UE, the base station notifies the first UE of the configured new transmission mode (for example, the notification may be implemented by sending signaling), that is, the base station sends the configuration information of the new transmission mode to the first UE. If the base station does not configure the new transmission mode for the first UE, that is, the base station does not introduce a NOMA transmission mode, but configures an original transmission mode in LTE, the base station correspondingly sends original downlink control signaling to the first UE, and the first UE demodulates data according to the original downlink control signaling. In this case, there is no time-frequency resource multiplexing, and spectrum utilization is not improved.

In the new transmission mode, the first UE may demodulate data by using a user-specific reference signal, or may demodulate data by using a cell-specific reference signal. Descriptions are separately given in the following.

In a first case, in the new transmission mode, when the first UE demodulates data by using a user-specific reference signal, and the second UE demodulates data by using the user-specific reference signal, the scheduling indication information of the first UE in the downlink control signaling specifically includes one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically includes one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

In this case, compared with the downlink control signaling originally sent to the first UE, the downlink control signaling sent to the first UE includes the scheduling indication information of the second UE. For the second UE, it may be considered that the base station does not send new downlink control signaling to the second UE, and still continues to use original downlink control signaling for the second UE, and the second UE does not know that the base station sends a NOMA modulation signal.

In a second case, in the new transmission mode, when the first UE demodulates data by using a user-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically includes one or more types of the following information of the second UE: a radio network temporary identifier, a modulation and coding scheme, a ratio PA of a data subcarrier power of an OFDM symbol without a pilot to a pilot subcarrier power, a ratio PB of a data subcarrier power of an OFDM symbol with a pilot to a pilot subcarrier power, or a transmission mode, where when the second UE uses a transmission mode 3 in LTE, the downlink control signaling further includes a transport layer quantity of the second UE; when the second UE uses a transmission mode 4 in LTE, the downlink control signaling further includes a transport layer quantity and precoding information of the second UE; or when the second UE uses a transmission mode 5 in LTE or a transmission mode 6 in LTE, the downlink control signaling further includes precoding information of the second UE.

In this case, compared with the downlink control signaling originally sent to the first UE, the downlink control signaling sent to the first UE includes the scheduling indication information of the second UE. For the second UE, it may be considered that the base station does not send new downlink control signaling to the second UE, and still continues to use original downlink control signaling for the second UE, and the second UE does not know that the base station sends a NOMA modulation signal.

In the foregoing two cases, the base station may also send new downlink control signaling to the second UE (that is, the base station adds DMRS port information of the first UE to the downlink control signaling originally to be sent to the second UE). In this case, the downlink control signaling sent to the second UE further includes one or more types of the following information of the second UE: a resource location indication, a modulation and coding scheme, a quantity of hybrid automatic repeat request processes, new data indicator information, or redundancy version information. In this case, the second UE knows that the base station sends a NOMA modulation signal.

In the foregoing several cases, because the first UE demodulates data by using a user-specific reference signal, there is a resource mapping conflict between the user-specific reference signal and data of the second UE. The conflict may be resolved according to the DMRS port information of the first UE and by using the following method: a DMRS pilot of the first UE and the data of the second UE are directly superposed, or the data of the second UE is punctured at a DMRS pilot location of the first UE.

In a third case, in the new transmission mode, when the first UE demodulates data by using a cell-specific reference signal, and the second UE demodulates data by using a cell-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically includes one or more types of the following information of the second UE: a ratio PA of a data subcarrier power of an OFDM symbol without a pilot to a pilot subcarrier power, a ratio PB of a data subcarrier power of an OFDM symbol with a pilot to a pilot subcarrier power, a radio network temporary identifier, or a modulation and coding scheme, where when the second UE uses a transmission mode 3 in LTE, the downlink control signaling further includes a transport layer quantity of the second UE; when the second UE uses a transmission mode 4 in the LTE, the downlink control signaling further includes a transport layer quantity and precoding information of the second UE; or when the second UE uses a transmission mode 5 in LTE or a transmission mode 6 in LTE, the downlink control signaling further includes precoding information of the second UE.

For the second UE, it may be considered that the base station does not send new downlink control signaling to the second UE, and still continues to use original downlink control signaling for the second UE, and the second UE does not know that the base station sends a NOMA modulation signal.

In a fourth case, in the new transmission mode, when the first UE demodulates data by using a cell-specific reference signal, and the second UE demodulates data by using a user-specific reference signal, the scheduling indication information of the first UE in the downlink control signaling specifically includes one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically includes one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

For the second UE, it may be considered that the base station does not send new downlink control signaling to the second UE, and still continues to use original downlink control signaling for the second UE, and the second UE does not know that the base station sends a NOMA modulation signal.

In addition, in the foregoing various cases, the scheduling indication information of the second UE in the downlink control signaling sent to the first UE specifically further includes: new data indicator information and/or redundancy version information of the second UE. The first UE determines, according to the new data indicator information and/or the redundancy version information of the second UE, whether the transmission data of the second UE is retransmitted data. If the transmission data of the second UE is retransmitted data, the first UE performs interference reconstruction with reference to an existing result of estimating the transmission signal of the second UE, and performs interference cancellation according to a result of interference reconstruction.

For the foregoing several cases, it is equivalent to that the base station sends different downlink control signaling to different UEs, so as to implement scheduling for different UEs. In practical application, the base station may further configure the new transmission mode for both the first UE and the second UE, and send same downlink control signaling to the first UE and the second UE. In this case, the scheduling indication information of the first UE in the downlink control signaling specifically includes one or more types of the following information of the first UE: a resource location indication, a modulation and coding scheme, a ratio of EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically includes one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

In this embodiment, because downlink control signaling received by first UE includes scheduling indication information of second UE, the first UE may identify and cancel transmission data of the second UE according to the scheduling indication information of the second UE that is included in the downlink control signaling, and successfully demodulates data of the first UE. The second UE may directly demodulate data of the second UE without performing interference cancellation. Therefore, in the present invention, a NOMA transmission manner is introduced into an LTE system, and spectrum utilization is improved.

It should be noted that when both the first UE and the second UE demodulate data by using a user-specific reference signal, the first UE and the second UE may use a same antenna port, or may use different antenna ports. No specific limitation is imposed in the present invention.

In addition, it should be noted that by using the method provided in the present invention, the NOMA transmission manner may be further combined with another communications system, and is not limited to being combined with the LTE system. No specific limitation is imposed herein.

In addition, the described apparatus embodiment is merely an example. The units described as separate parts may or may not be physically separate, and parts displayed as units may or may not be physical units, may be located in one position, or may be distributed on multiple network units. Some or all of the modules may be selected according to actual needs to achieve the objectives of the solutions of the embodiments. In addition, in the accompanying drawings of the apparatus embodiments provided in the present invention, connection relationships between modules indicate that the modules have communication connections with each other, and may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of the present invention.

The foregoing describes in detail a non-orthogonal multiple access transmission method, a base station, and UE that are provided in the embodiments of the present invention. A person of ordinary skill in the art may make modifications to the specific implementation manners and the application scope according to the ideas of the embodiments of the present invention. Therefore, the content of this specification shall not be construed as a limitation to the present invention.

## Claims

1. A base station, comprising:
a first configuration unit, configured to: configure a new transmission mode for first user equipment UE, and notify the first UE of the configured new transmission mode, wherein the new transmission mode indicates: a transmission signal of second UE located in a same cell as the first UE is superposed on a time-frequency resource allocated to the first UE, and the second UE is interfering UE of the first UE; and
a first sending unit, configured to send first downlink control signaling to the first UE, so that the first UE demodulates, according to the first downlink control signaling, received data sent by the base station, wherein the first downlink control signaling comprises scheduling indication information of the first UE and scheduling indication information of the second UE.

2. The base station according to claim 1, wherein when the first configuration unit configures the new transmission mode for the first UE, the first UE demodulates data by using a user-specific reference signal, and the second UE demodulates data by using the user-specific reference signal, the scheduling indication information of the first UE in the first downlink control signaling specifically comprises one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the first downlink control signaling specifically comprises one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

3. The base station according to claim 1, wherein when the first configuration unit configures the new transmission mode for the first UE, the first UE demodulates data by using a user-specific reference signal, and the second UE demodulates data by using a cell-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically comprises one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, wherein when the second UE uses a transmission mode 3 in Long Term Evolution LTE, the first downlink control signaling further comprises a transport layer quantity of the second UE; when the second UE uses a transmission mode 4 in the LTE, the first downlink control signaling further comprises a transport layer quantity and precoding information of the second UE; or when the second UE uses a transmission mode 5 in the LTE or a transmission mode 6 in the LTE, the first downlink control signaling further comprises precoding information of the second UE.

4. The base station according to claim 2 or 3, wherein
the first sending unit is further configured to send second downlink control signaling to the second UE, wherein the second downlink control signaling comprises demodulation reference signal port information of the first UE and scheduling indication information of the second UE, and the scheduling indication information of the second UE in the second downlink control signaling specifically comprises one or more types of the following information of the second UE: a resource location indication, a modulation and coding scheme, a quantity of hybrid automatic repeat request processes, new data indicator information, or redundancy version information.

5. The base station according to claim 1, wherein when the first configuration unit configures the new transmission mode for the first UE, the first UE demodulates data by using a cell-specific reference signal, and the second UE demodulates data by using the cell-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically comprises one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, wherein when the second UE uses a transmission mode 3 in Long Term Evolution LTE, the first downlink control signaling further comprises a transport layer quantity of the second UE; when the second UE uses a transmission mode 4 in the LTE, the first downlink control signaling further comprises a transport layer quantity and precoding information of the second UE; or when the second UE uses a transmission mode 5 in the LTE or a transmission mode 6 in the LTE, the first downlink control signaling further comprises precoding information of the second UE.

6. The base station according to claim 1, wherein when the first configuration unit configures the new transmission mode for the first UE, the first UE demodulates data by using a cell-specific reference signal, and the second UE demodulates data by using a user-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically comprises one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

7. The base station according to any one of claims 2 to 6, wherein the scheduling indication information of the second UE in the first downlink control signaling specifically further comprises: new data indicator information and/or redundancy version information of the second UE.

8. A base station, comprising:
a second configuration unit, configured to: configure a new transmission mode for first user equipment UE and second UE, and notify the first UE and the second UE of the configured new transmission mode, wherein the new transmission mode indicates: a transmission signal of the first UE and a transmission signal of the second UE multiplex a same time-frequency resource, the first UE and the second UE are located in a same cell, and the first UE and the second UE are interfering UE of each other; and
a second sending unit, configured to send same downlink control signaling to the first UE and the second UE, so that the first UE and the second UE demodulate, according to the downlink control signaling, received data sent by the base station, wherein the downlink control signaling comprises scheduling indication information of the first UE and scheduling indication information of the second UE.

9. The base station according to claim 8, wherein the scheduling indication information of the first UE specifically comprises one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE specifically comprises one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

10. User equipment UE, wherein the UE is first UE, and comprises:
a receiving unit, configured to receive configuration information that is of a new transmission mode and is sent by a base station, wherein the new transmission mode indicates: the base station superposes a transmission signal, of second UE located in a same cell as the first UE, on a time-frequency resource allocated by the base station to the first UE, and the second UE is interfering UE of the first UE, wherein
the receiving unit is further configured to receive, in the new transmission mode, downlink control signaling sent by the base station, wherein the downlink control signaling comprises scheduling indication information of the first UE and scheduling indication information of the second UE; and
a demodulation unit, configured to demodulate, according to the downlink control signaling, received data sent by the base station.

11. The UE according to claim 10, wherein in the new transmission mode, when the first UE demodulates data by using a user-specific reference signal, and the second UE demodulates data by using the user-specific reference signal, the scheduling indication information of the first UE in the downlink control signaling specifically comprises one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically comprises one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

12. The UE according to claim 10, wherein in the new transmission mode, when the first UE demodulates data by using a user-specific reference signal, and the second UE demodulates data by using a cell-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically comprises one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, wherein when the second UE uses a transmission mode 3 in Long Term Evolution LTE, the downlink control signaling further comprises a transport layer quantity of the second UE; when the second UE uses a transmission mode 4 in the LTE, the downlink control signaling further comprises a transport layer quantity and precoding information of the second UE; or when the second UE uses a transmission mode 5 in the LTE or a transmission mode 6 in the LTE, the downlink control signaling further comprises precoding information of the second UE.

13. The UE according to claim 10, wherein in the new transmission mode, when the first UE demodulates data by using a cell-specific reference signal, and the second UE demodulates data by using the cell-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically comprises one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, wherein when the second UE uses a transmission mode 3 in Long Term Evolution LTE, the downlink control signaling further comprises a transport layer quantity of the second UE; when the second UE uses a transmission mode 4 in the LTE, the downlink control signaling further comprises a transport layer quantity and precoding information of the second UE; or when the second UE uses a transmission mode 5 in the LTE or a transmission mode 6 in the LTE, the downlink control signaling further comprises precoding information of the second UE.

14. The UE according to claim 10, wherein in the new transmission mode, when the first UE demodulates data by using a cell-specific reference signal, and the second UE demodulates data by using a user-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically comprises one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

15. The UE according to any one of claims 11 to 14, wherein the scheduling indication information of the second UE in the downlink control signaling specifically further comprises: new data indicator information and/or redundancy version information of the second UE.

16. The UE according to claim 10, wherein if the second UE also receives the configuration information of the new transmission mode and the downlink control signaling, the scheduling indication information of the first UE in the downlink control signaling specifically comprises one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically comprises one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

17. A base station, comprising a first processor and a first transmitter, wherein
the first processor is configured to: configure a new transmission mode for first user equipment UE, and notify the first UE of the configured new transmission mode, wherein the new transmission mode indicates: a transmission signal of second UE located in a same cell as the first UE is superposed on a time-frequency resource allocated to the first UE, and the second UE is interfering UE of the first UE; and
the first processor is further configured to control the first transmitter to send first downlink control signaling to the first UE, so that the first UE demodulates, according to the first downlink control signaling, received data sent by the base station, wherein the first downlink control signaling comprises scheduling indication information of the first UE and scheduling indication information of the second UE.

18. The base station according to claim 17, wherein when the first processor configures the new transmission mode for the first UE, the first UE demodulates data by using a user-specific reference signal, and the second UE demodulates data by using the user-specific reference signal, the scheduling indication information of the first UE in the first downlink control signaling specifically comprises one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the first downlink control signaling specifically comprises one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

19. The base station according to claim 17, wherein when the first processor configures the new transmission mode for the first UE, the first UE demodulates data by using a user-specific reference signal, and the second UE demodulates data by using a cell-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically comprises one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, wherein when the second UE uses a transmission mode 3 in Long Term Evolution LTE, the first downlink control signaling further comprises a transport layer quantity of the second UE; when the second UE uses a transmission mode 4 in the LTE, the first downlink control signaling further comprises a transport layer quantity and precoding information of the second UE; or when the second UE uses a transmission mode 5 in the LTE or a transmission mode 6 in the LTE, the first downlink control signaling further comprises precoding information of the second UE.

20. The base station according to claim 18 or 19, wherein
the first processor is further configured to control the first transmitter to send second downlink control signaling to the second UE, wherein the second downlink control signaling comprises demodulation reference signal port information of the first UE and scheduling indication information of the second UE, and the scheduling indication information of the second UE in the second downlink control signaling specifically comprises one or more types of the following information of the second UE: a resource location indication, a modulation and coding scheme, a quantity of hybrid automatic repeat request processes, new data indicator information, or redundancy version information.

21. The base station according to claim 17, wherein when the first processor configures the new transmission mode for the first UE, the first UE demodulates data by using a cell-specific reference signal, and the second UE demodulates data by using the cell-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically comprises one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, wherein when the second UE uses a transmission mode 3 in Long Term Evolution LTE, the first downlink control signaling further comprises a transport layer quantity of the second UE; when the second UE uses a transmission mode 4 in the LTE, the first downlink control signaling further comprises a transport layer quantity and precoding information of the second UE; or when the second UE uses a transmission mode 5 in the LTE or a transmission mode 6 in the LTE, the first downlink control signaling further comprises precoding information of the second UE.

22. The base station according to claim 17, wherein when the first processor configures the new transmission mode for the first UE, the first UE demodulates data by using a cell-specific reference signal, and the second UE demodulates data by using a user-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically comprises one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

23. The base station according to any one of claims 18 to 22, wherein the scheduling indication information of the second UE in the first downlink control signaling specifically further comprises: new data indicator information and/or redundancy version information of the second UE.

24. A base station, comprising a second processor and a second transmitter, wherein
the second processor is configured to: configure a new transmission mode for first user equipment UE and second UE, and notify the first UE and the second UE of the configured new transmission mode, wherein the new transmission mode indicates: a transmission signal of the first UE and a transmission signal of the second UE multiplex a same time-frequency resource, the first UE and the second UE are located in a same cell, and the first UE and the second UE are interfering UE of each other; and
the second processor is further configured to control the second transmitter to send same downlink control signaling to the first UE and the second UE, so that the first UE and the second UE demodulate, according to the downlink control signaling, received data sent by the base station, wherein the downlink control signaling comprises scheduling indication information of the first UE and scheduling indication information of the second UE.

25. The base station according to claim 24, wherein the scheduling indication information of the first UE specifically comprises one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE specifically comprises one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

26. User equipment UE, wherein the UE is first UE, and comprises a third processor and a receiver, wherein
the third processor is configured to control the receiver to receive configuration information of a new transmission mode, wherein the new transmission mode indicates: the base station superposes a transmission signal, of second UE located in a same cell as the first UE, on a time-frequency resource allocated by the base station to the first UE, and the second UE is interfering UE of the first UE;
the third processor is further configured to control, in the new transmission mode, the receiver to receive downlink control signaling sent by the base station, wherein the downlink control signaling comprises scheduling indication information of the first UE and scheduling indication information of the second UE; and
the third processor is further configured to demodulate, according to the downlink control signaling, received data sent by the base station.

27. The UE according to claim 26, wherein in the new transmission mode, when the first UE demodulates data by using a user-specific reference signal, and the second UE demodulates data by using the user-specific reference signal, the scheduling indication information of the first UE in the downlink control signaling specifically comprises one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically comprises one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

28. The UE according to claim 26, wherein in the new transmission mode, when the first UE demodulates data by using a user-specific reference signal, and the second UE demodulates data by using a cell-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically comprises one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, wherein when the second UE uses a transmission mode 3 in Long Term Evolution LTE, the downlink control signaling further comprises a transport layer quantity of the second UE; when the second UE uses a transmission mode 4 in the LTE, the downlink control signaling further comprises a transport layer quantity and precoding information of the second UE; or when the second UE uses a transmission mode 5 in the LTE or a transmission mode 6 in the LTE, the downlink control signaling further comprises precoding information of the second UE.

29. The UE according to claim 26, wherein in the new transmission mode, when the first UE demodulates data by using a cell-specific reference signal, and the second UE demodulates data by using the cell-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically comprises one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, wherein when the second UE uses a transmission mode 3 in Long Term Evolution LTE, the downlink control signaling further comprises a transport layer quantity of the second UE; when the second UE uses a transmission mode 4 in the LTE, the downlink control signaling further comprises a transport layer quantity and precoding information of the second UE; or when the second UE uses a transmission mode 5 in the LTE or a transmission mode 6 in the LTE, the downlink control signaling further comprises precoding information of the second UE.

30. The UE according to claim 26, wherein in the new transmission mode, when the first UE demodulates data by using a cell-specific reference signal, and the second UE demodulates data by using a user-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically comprises one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

31. The UE according to any one of claims 27 to 30, wherein the scheduling indication information of the second UE in the downlink control signaling specifically further comprises: new data indicator information and/or redundancy version information of the second UE.

32. The UE according to claim 26, wherein if the second UE also receives the configuration information of the new transmission mode and the downlink control signaling, the scheduling indication information of the first UE in the downlink control signaling specifically comprises one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically comprises one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

33. A non-orthogonal multiple access transmission method, wherein the method is applied to a base station, and comprises:
configuring a new transmission mode for first user equipment UE, and notifying the first UE of the configured new transmission mode, wherein the new transmission mode indicates: a transmission signal of second UE located in a same cell as the first UE is superposed on a time-frequency resource allocated to the first UE, and the second UE is interfering UE of the first UE; and
sending first downlink control signaling to the first UE, so that the first UE demodulates, according to the first downlink control signaling, received data sent by the base station, wherein the first downlink control signaling comprises scheduling indication information of the first UE and scheduling indication information of the second UE.

34. The method according to claim 33, wherein when the new transmission mode is configured for the first UE, the first UE demodulates data by using a user-specific reference signal, and the second UE demodulates data by using the user-specific reference signal, the scheduling indication information of the first UE in the first downlink control signaling specifically comprises one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the first downlink control signaling specifically comprises one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

35. The method according to claim 33, wherein when the new transmission mode is configured for the first UE, the first UE demodulates data by using a user-specific reference signal, and the second UE demodulates data by using a cell-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the first downlink control signaling specifically comprises one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, wherein when the second UE uses a transmission mode 3 in Long Term Evolution LTE, the first downlink control signaling further comprises a transport layer quantity of the second UE; when the second UE uses a transmission mode 4 in the LTE, the first downlink control signaling further comprises a transport layer quantity and precoding information of the second UE; or when the second UE uses a transmission mode 5 in the LTE or a transmission mode 6 in the LTE, the first downlink control signaling further comprises precoding information of the second UE.

36. The method according to claim 34 or 35, wherein the method further comprises:
sending second downlink control signaling to the second UE, wherein the second downlink control signaling comprises demodulation reference signal port information of the first UE and scheduling indication information of the second UE, and the scheduling indication information of the second UE in the second downlink control signaling specifically comprises one or more types of the following information of the second UE: a resource location indication, a modulation and coding scheme, a quantity of hybrid automatic repeat request processes, new data indicator information, or redundancy version information.

37. The method according to claim 33, wherein when the new transmission mode is configured for the first UE, the first UE demodulates data by using a cell-specific reference signal, and the second UE demodulates data by using the cell-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the first downlink control signaling specifically comprises one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, wherein when the second UE uses a transmission mode 3 in Long Term Evolution LTE, the first downlink control signaling further comprises a transport layer quantity of the second UE; when the second UE uses a transmission mode 4 in the LTE, the first downlink control signaling further comprises a transport layer quantity and precoding information of the second UE; or when the second UE uses a transmission mode 5 in the LTE or a transmission mode 6 in the LTE, the first downlink control signaling further comprises precoding information of the second UE.

38. The method according to claim 33, wherein when the new transmission mode is configured for the first UE, the first UE demodulates data by using a cell-specific reference signal, and the second UE demodulates data by using a user-specific reference signal, the scheduling indication information of the first UE in the first downlink control signaling specifically comprises one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the first downlink control signaling specifically comprises one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

39. The method according to any one of claims 34 to 38, wherein the scheduling indication information of the second UE in the first downlink control signaling specifically further comprises: new data indicator information and/or redundancy version information of the second UE.

40. A non-orthogonal multiple access transmission method, wherein the method is applied to a base station, and comprises:
configuring a new transmission mode for first user equipment UE and second UE, and notifying the first UE and the second UE of the configured new transmission mode, wherein the new transmission mode indicates: a transmission signal of the first UE and a transmission signal of the second UE multiplex a same time-frequency resource, the first UE and the second UE are located in a same cell, and the first UE and the second UE are interfering UE of each other; and
sending same downlink control signaling to the first UE and the second UE, so that the first UE and the second UE demodulate, according to the downlink control signaling, received data sent by the base station, wherein the downlink control signaling comprises scheduling indication information of the first UE and scheduling indication information of the second UE.

41. The method according to claim 40, wherein the scheduling indication information of the first UE specifically comprises one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE specifically comprises one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.

42. A non-orthogonal multiple access transmission method, wherein the method is applied to user equipment UE, the UE is first UE, and the method comprises:
receiving configuration information that is of a new transmission mode and is sent by a base station, wherein the new transmission mode indicates: the base station superposes a transmission signal, of second UE located in a same cell as the first UE, on a time-frequency resource allocated by the base station to the first UE, and the second UE is interfering UE of the first UE;
receiving, in the new transmission mode, downlink control signaling sent by the base station, wherein the downlink control signaling comprises scheduling indication information of the first UE and scheduling indication information of the second UE; and
demodulating, according to the downlink control signaling, received data sent by the base station.

43. The method according to claim 42, wherein in the new transmission mode, when the first UE demodulates data by using a user-specific reference signal, and the second UE demodulates data by using the user-specific reference signal, the scheduling indication information of the first UE in the downlink control signaling specifically comprises one or more types of the following information of the first UE: a resource location indication, a modulation and coding scheme, a quantity of hybrid automatic repeat request processes, new data indicator information, redundancy version information, a ratio of energy per resource element EPRE of a pilot to EPRE of data of the first UE, a transport layer quantity, or antenna port information; and the scheduling indication information of the second UE in the downlink control signaling specifically comprises one or more types of the following information of the second UE: a radio network temporary identifier, a modulation and coding scheme, antenna port information, a ratio of the EPRE of the pilot to EPRE of data of the second UE, a ratio of the EPRE of the data of the first UE to EPRE of data of the second UE, data power information, or transport layer quantity information.

44. The method according to claim 42, wherein in the new transmission mode, when the first UE demodulates data by using a user-specific reference signal, and the second UE demodulates data by using a cell-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, a transport layer quantity, or antenna port information; and
the scheduling indication information of the second UE in the downlink control signaling specifically comprises one or more types of the following information of the second UE: a radio network temporary identifier, a modulation and coding scheme, a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, or a transmission mode, wherein when the second UE uses a transmission mode 3 in Long Term Evolution LTE, the downlink control signaling further comprises a transport layer quantity of the second UE; when the second UE uses a transmission mode 4 in the LTE, the downlink control signaling further comprises a transport layer quantity and precoding information of the second UE; or when the second UE uses a transmission mode 5 in the LTE or a transmission mode 6 in the LTE, the downlink control signaling further comprises precoding information of the second UE.

45. The method according to claim 42, wherein in the new transmission mode, when the first UE demodulates data by using a cell-specific reference signal, and the second UE demodulates data by using the cell-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, redundancy version information, or antenna port information; and
the scheduling indication information of the second UE in the downlink control signaling specifically comprises one or more types of the following information of the second UE: a ratio PA of a data subcarrier power of an orthogonal frequency division multiplexing OFDM symbol without a pilot to a pilot subcarrier power, a ratio PB of a data subcarrier power of an OFDM symbol with a pilot to a pilot subcarrier power, a radio network temporary identifier, or a modulation and coding scheme, wherein when the second UE uses a transmission mode 3 in Long Term Evolution LTE, the downlink control signaling further comprises a transport layer quantity of the second UE; when the second UE uses a transmission mode 4 in the LTE, the downlink control signaling further comprises a transport layer quantity and precoding information of the second UE; or when the second UE uses a transmission mode 5 in the LTE or a transmission mode 6 in the LTE, the downlink control signaling further comprises precoding information of the second UE.

46. The method according to claim 42, wherein in the new transmission mode, when the first UE demodulates data by using a cell-specific reference signal, and the second UE demodulates data by using a user-specific reference signal, the scheduling indication information of the first UE in the downlink control signaling specifically comprises one or more types of the following information of the first UE: a resource location indication, a modulation and coding scheme, rank information, a codebook matrix index, a quantity of hybrid automatic repeat request processes, new data indicator information, or redundancy version information; and the scheduling indication information of the second UE in the downlink control signaling specifically comprises one or more types of the following information of the second UE: a radio network temporary identifier, a transmission mode, a modulation and coding scheme, antenna port information, a transport layer quantity, a ratio of energy per resource element EPRE of data of the first UE to EPRE of data of the second UE, a ratio of EPRE of data of the first UE to EPRE of a dedicated pilot of the second UE, or dedicated pilot power information.

47. The method according to any one of claims 43 to 46, wherein the scheduling indication information of the second UE in the downlink control signaling specifically further comprises: new data indicator information and/or redundancy version information of the second UE.

48. The method according to claim 42, wherein if the second UE also receives the configuration information of the new transmission mode and the downlink control signaling, the scheduling indication information of the first UE in the downlink control signaling specifically comprises one or more types of the following information of the first UE: a resource location indication, a modulation and coding scheme, a ratio of energy per resource element EPRE of a pilot to EPRE of data of the first UE, a ratio of EPRE of data of the first UE to EPRE of data of the second UE, antenna port information, a quantity of hybrid automatic repeat request processes, new data indicator information, or redundancy version information; and the scheduling indication information of the second UE in the downlink control signaling specifically comprises one or more types of the following information of the second UE: a resource location indication, a modulation and coding scheme, a ratio of the EPRE of the pilot to the EPRE of the data of the second UE, antenna port information, a quantity of hybrid automatic repeat request processes, new data indicator information, or redundancy version information.
